# EUROPEAN PATENT APPLICATION

(11) **EP 2 357 382 A1**
(43) Date of publication of application: **17.08.2011**
(21) Application number: 11152788.3
(22) Date of filing: 31.01.2011
(51) Int. Cl.: F16H 3/00

(54) **Integrated gear train with bidirectional input and one-way output**

(30) Priority: 03.02.2010 US 699149
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

For the integrated gear train with bidirectional input and one-way output, the rotary direction of the input shaft (2000) is changed, and the output direction of the output shaft (3000) is constant, in which the speed ratio between the input shaft (2000) driven at the first rotary direction and the output shaft (3000), and that between the input shaft (2000) driven at the second rotary direction and the output shaft (3000) are same or different.

## Description

### BACKGROUND OF THE INVENTION

### (a) Field of the Invention

For the integrated gear train with bidirectional input and one-way output, the first gear train and the second gear train integrate to be a structure with common revolving shaft, in which the input shaft and the output shaft of the first gear train are at same rotary direction, and the input shaft and the output shaft of the second gear train are at different rotary direction, through the above integrated gear train with bidirectional input and one-way output, the rotary direction of the input shaft is changed, and the output direction of the output shaft is constant.

### (b) Description of the Prior Art

The conventional gear train with bidirectional input and constant rotary direction output is limited, which is constituted by the planetary type transmission gear train, because the internal transmission structure cannot make the transmission ratio between the input shaft driven at the first rotary direction and the output shaft and that between the input shaft driven at the second rotary direction and the output shaft without difference to implement one-way output.

### SUMMARY OF THE INVENTION

For the integrated gear train with bidirectional input and one-way output, the rotary direction of the input shaft is changed, and the output direction of the output shaft is constant, in which the speed ratio between the input shaft driven at the first rotary direction and the output shaft, and that between the input shaft driven at the second rotary direction and the output shaft are same or different.

### BRIEF DESCRIPTION OF THE DRAWINGS

Fig. 1 is a schematic structural view showing the first embodiment of the integrated gear train with bidirectional input and one-way output.
Fig. 2 is a schematic structural view showing the second embodiment of the integrated gear train with bidirectional input and one-way output.
Fig. 3 is a schematic structural view showing the third embodiment of the integrated gear train with bidirectional input and one-way output.
Fig. 4 is a schematic structural view showing the 4th embodiment of the integrated gear train with bidirectional input and one-way output.
Fig. 5 is a schematic structural view showing the 5th embodiment of the integrated gear train with bidirectional input and one-way output.
Fig. 6 is a schematic structural view showing the 6th embodiment of the integrated gear train with bidirectional input and one-way output.
Fig. 7 is a schematic structural view showing the 7th embodiment of the integrated gear train with bidirectional input and one-way output.
Fig. 8 is a schematic structural view showing the 8th embodiment of the integrated gear train with bidirectional input and one-way output.
Fig. 9 is a schematic structural view showing the 9th embodiment of the integrated gear train with bidirectional input and one-way output.
Fig. 10 is a schematic structural view showing the 10th embodiment of the integrated gear train with bidirectional input and one-way output.
Fig. 11 is a schematic structural view showing the 11th embodiment of the integrated gear train with bidirectional input and one-way output.
Fig. 12 is a schematic structural view showing the 12th embodiment of the integrated gear train with bidirectional input and one-way output.

### DESCRIPTION OF MAIN COMPONENT SYMBOLS

(301), (302), (305): One-way transmission
(500): Shell of the transmission gear train
(600): Machine body
(602), (603), (605), (606), (615), (616), (617): Driving wheel
(604): Revolving shaft
(607): Transmission belt
(618): Revolving shaft
(2000): Input shaft
(3000): Output shaft

### DETAILED DESCRIPTION OF THE PREFERRED EMBODIMENTS

The structural patterns of the integrated gear train with bidirectional input and one-way output include the input shaft and the output shaft coaxially fitting, or the input shaft and the output shaft with different axises;
the main features are as following:
-- transmission: constituted by gear, friction wheel, pulley, drive belt group, sprocket, transmission chain group, transmission linkage, or rotary transmission actuated by liquid, for getting rotary output with same or different direction, and same or different speed ratio with rotary input;
-- the forward and reverse rotary power source deriving from one or more of the following power source, including human power, machine power, electric motors, hydraulic motors or pneumatic motors; including:
   (1) the forward and reversely driven by human power; or
   (2) the forward and reversely driven by machine power; or
   (3) the forward and reversely driven by hydraulic or pneumatic motors; or
   (4) the forward and reversely driven by electric motors; or
   (5) driven at different directions by the rotary power sources from (1)∼(4);
-- the first rotary direction and the second rotary direction are reverse;
-- if the input terminal is driven by the first rotary direction, the first rotary direction output is produced through the first driving gear train driving the output terminal;
-- if the input terminal is driven by the second rotary direction, the first rotary direction output is produced through the second driving gear train driving the output terminal;
-- an one-way transmission is installed between the first driving gear train and the second driving gear train to avoid the interference from the second driving gear train when the first driving gear train is used to be the first rotary direction input and produces the first rotary direction output; and
-- an one-way transmission is installed between the second driving gear train and the first driving gear train to avoid the interference from the first driving gear train when the second driving gear train is used to be the second rotary direction input and produces the first rotary direction output.

Some embodiments are provided as following to describe the enforceability of the integrated gear train with bidirectional input and one-way output, and the other embodiments with same functions are omitted.

The following are a variety of structural types of the integrated gear train with bidirectional input and one-way output, the structural descriptions are as following:

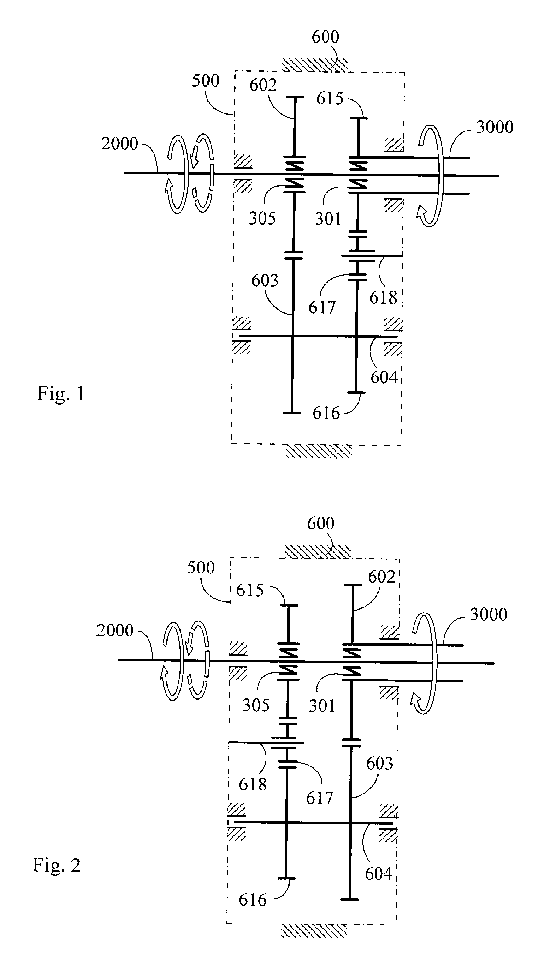

Fig. 1 is a schematic structural view showing the first embodiment of the integrated gear train with bidirectional input and one-way output;

As shown in Fig. 1, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;

-- machine body (600): relatively static organization structure;
-- the input shaft (2000) through the one-way transmission (305), and integrated with the driving wheel (602);
-- the rotary direction of driving wheel (602) being different from that of driving wheel (603), driving wheel (603) and driving wheel (616) co-integrated with revolving shaft (604), and a bearing installed between the revolving shaft (604) and the shell of the transmission gear train (500);
-- the driving wheel (616) rotating at the driving wheel (617) of the revolving shaft (618), and then driving the driving wheel (615) for constituting driving wheel set with same rotary direction;
-- the revolving shaft (618) integrated with the shell of the transmission gear train (500);
-- the driving wheel (615) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (616), and then the driving wheel (616) through the driving wheel (617) for further the driving wheel (615), and then the driving wheel (615) driving the output shaft (3000) to produce the first rotary direction output to constitute the second driving gear train.

Fig. 2 is a schematic structural view showing the second embodiment of the integrated gear train with bidirectional input and one-way output;

As shown in Fig. 2, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (615);
-- the driving wheel (615) rotating at the driving wheel (617) of the revolving shaft (618), and then driving the driving wheel (616), the driving wheel (616) and the driving wheel (603) co-integrated with the revolving shaft (604), and a bearing installed between the revolving shaft (604) and the shell of the transmission gear train (500);
-- the revolving shaft (618) integrated with the shell of the transmission gear train (500);
-- the driving wheel (603) and the driving wheel (602) integrated for a driving wheel set with different rotary direction;
-- the driving wheel (602) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (615), and then the driving wheel (615) driving the driving wheel (616) and the driving wheel (603) via the driving wheel (617), and then the driving wheel (603) driving the driving wheel (602), and then the driving wheel (602) driving the output shaft (3000) to produce the first rotary direction output to constitute the second driving gear train.

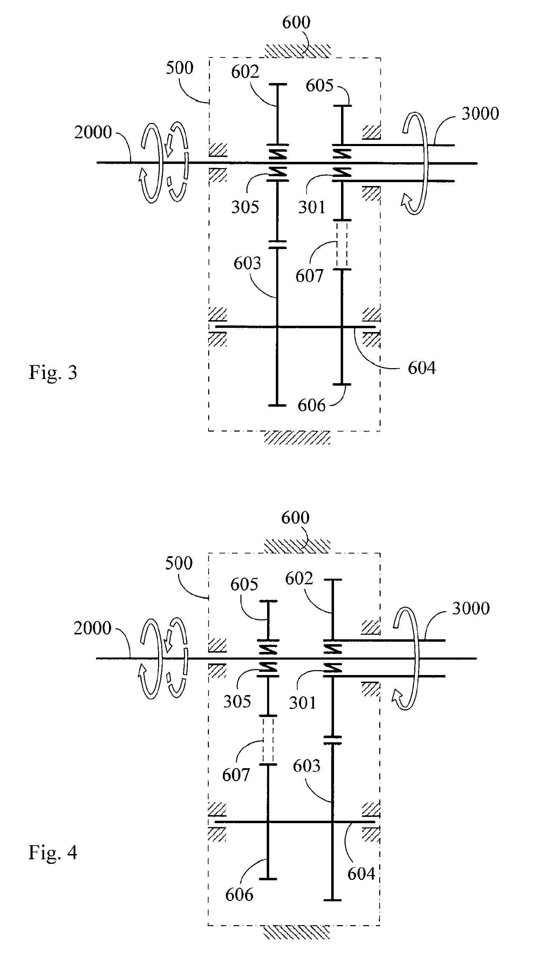

Fig. 3 is a schematic structural view showing the third embodiment of the integrated gear train with bidirectional input and one-way output;

As shown in Fig. 3, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (602);
-- the rotary direction of driving wheel (602) being different from that of driving wheel (603), driving wheel (603) and driving wheel (606) co-integrated with the revolving shaft (604), and a bearing installed between the revolving shaft (604) and the shell of the transmission gear train (500);
-- the driving wheel (606) and the driving wheel (605) co-integrated with transmission belt (607), such as pulley or sprocket, through transmission for constituting a driving wheel set with same rotary direction;
-- the driving wheel (605) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (606), and then the driving wheel (606) driving the driving wheel (605) for driving the output shaft (3000) to produce the first rotary direction output to constitute the second driving gear train.

Fig. 4 is a schematic structural view showing the 4th embodiment of the integrated gear train with bidirectional input and one-way output;

As shown in Fig. 4, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (605);
-- the driving wheel (606) and the driving wheel (605) co-integrated with the transmission belt (607), such as pulley or sprocket, through transmission for constituting a driving wheel set with same rotary direction, the driving wheel (603) and the driving wheel (606) co-integrated with the revolving shaft (604), and a bearing installed between the revolving shaft (604) and the shell of the transmission gear train (500);
-- the driving wheel (603) and the driving wheel (602) with different rotary directions;
-- the driving wheel (602) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (605), and then the driving wheel (605) driving the driving wheel (606) and the driving wheel (603), and then the driving wheel (603) driving the driving wheel (602) for driving the output shaft (3000) to produce the first rotary direction output to constitute the second driving gear train.

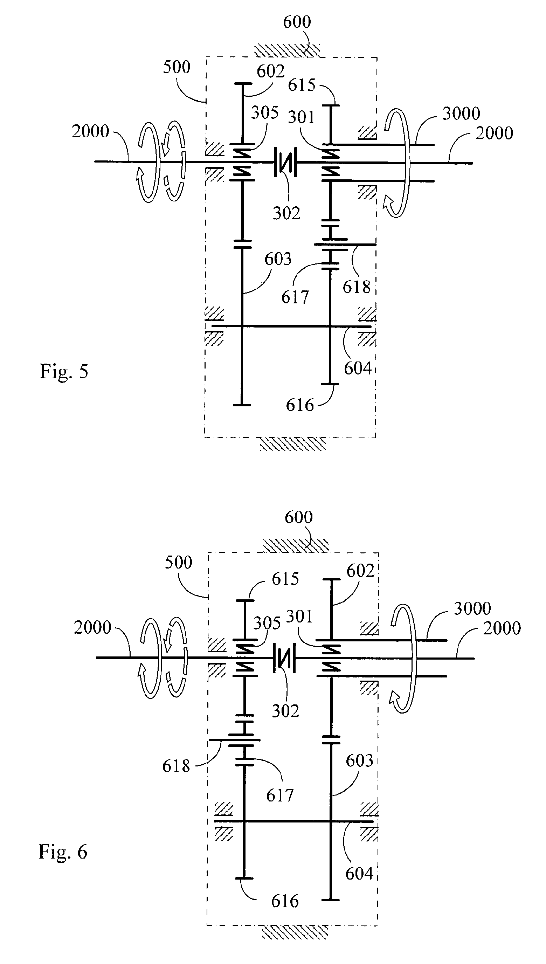

Fig. 5 is a schematic structural view showing the 5th embodiment of the integrated gear train with bidirectional input and one-way output;

As shown in Fig. 5, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the driving wheel (602), and the one-way transmission (305) installed between the above both;
-- the driving wheel (602) and the driving wheel (603) with different rotary directions, the driving wheel (603) and the driving wheel (616) co-integrated with the revolving shaft (604), and a bearing installed between the revolving shaft (604) and the shell of the transmission gear train (500);
-- the driving wheel (616) rotating at the driving wheel (617) of the revolving shaft (618), and then driving the driving wheel (615) for constituting driving wheel set with same rotary direction;
-- the revolving shaft (618) integrated with the shell of the transmission gear train (500);
-- the driving wheel (615) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (616), and then the driving wheel (616) through the driving wheel (617) for further driving the driving wheel (615), and then the driving wheel (615) driving the output shaft (3000) to produce the first rotary direction output to constitute the second driving gear train.

Fig. 6 is a schematic structural view showing the 6th embodiment of the integrated gear train with bidirectional input and one-way output;

As shown in Fig. 6, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the driving wheel (615), and the one-way transmission (305) installed between the above both;
-- the driving wheel (615) rotating at the driving wheel (617) of the revolving shaft (618), and then driving the driving wheel (616), the driving wheel (616) and the driving wheel (603) co-integrated with the revolving shaft (604), and a bearing installed between the revolving shaft (604) and the shell of the transmission gear train (500);
-- the revolving shaft (618) integrated with the shell of the transmission gear train (500);
-- the driving wheel (603) and the driving wheel (602) integrated for a driving wheel set with different rotary direction;
-- the driving wheel (602) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (615), and then the driving wheel (615) driving the driving wheel (616) and the driving wheel (603) via the driving wheel (617), and then the driving wheel (603) driving the driving wheel (602), and then the driving wheel (602) driving the output shaft (3000) to produce the first rotary direction output to constitute the second driving gear train.

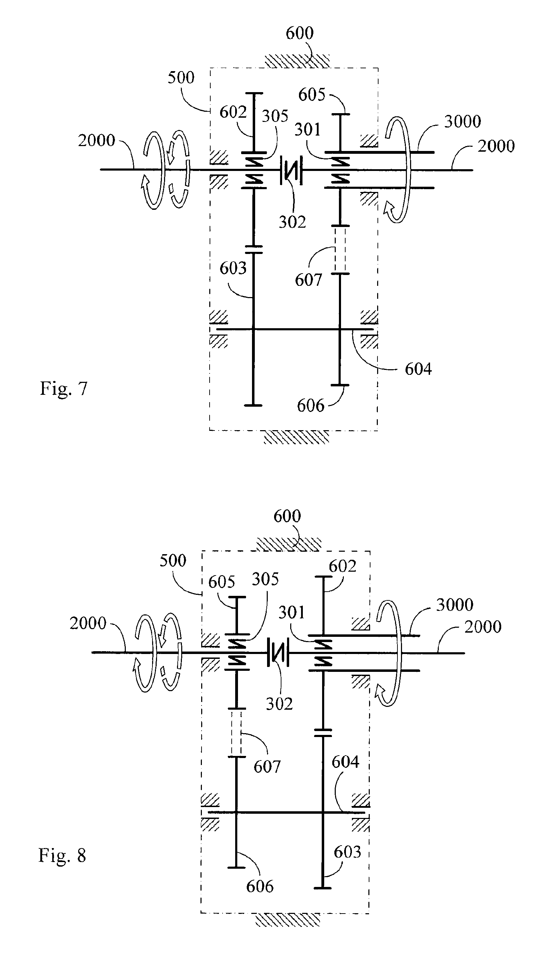

Fig. 7 is a schematic structural view showing the 7th embodiment of the integrated gear train with bidirectional input and one-way output; and

As shown in Fig. 7, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (602);
-- the driving wheel (602) and the driving wheel (603) with different rotary directions, the driving wheel (603) and the driving wheel (606) co-integrated with the revolving shaft (604), and a bearing installed between the revolving shaft (604) and the shell of the transmission gear train (500);
-- the driving wheel (606) and the driving wheel (605) co-integrated with the transmission belt (607), such as pulley or sprocket, through transmission for constituting a driving wheel set with same rotary direction;
-- the driving wheel (615) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (606), and then the driving wheel (606) through the transmission belt (607) for further driving the driving wheel (605), and then the driving wheel (605) driving the output shaft (3000) to produce the first rotary direction output to constitute the second driving gear train.

Fig. 8 is a schematic structural view showing the 8th embodiment of the integrated gear train with bidirectional input and one-way output.

As shown in Fig. 8, the integrated gear train with bidirectional input and one-way output is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (605);
-- the driving wheel (605) through the transmission belt (607) for driving the driving wheel (606), the driving wheel (606) and the driving wheel (603) co-integrated with the revolving shaft (604), and a bearing installed between the revolving shaft (604) and the shell of the transmission gear train (500);
-- the driving wheel (603) and the driving wheel (602) integrated for a driving wheel set with different rotary direction;
-- the driving wheel (602) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (605), and then the driving wheel (605) driving the driving wheel (606) via the transmission belt (607), and then the driving wheel (606) through the revolving shaft (604) for driving the driving wheel (603), and then the driving wheel (603) driving the driving wheel (602), and the driving wheel (602) driving the output shaft (3000) to produce the first rotary direction output to constitute the second driving gear train.

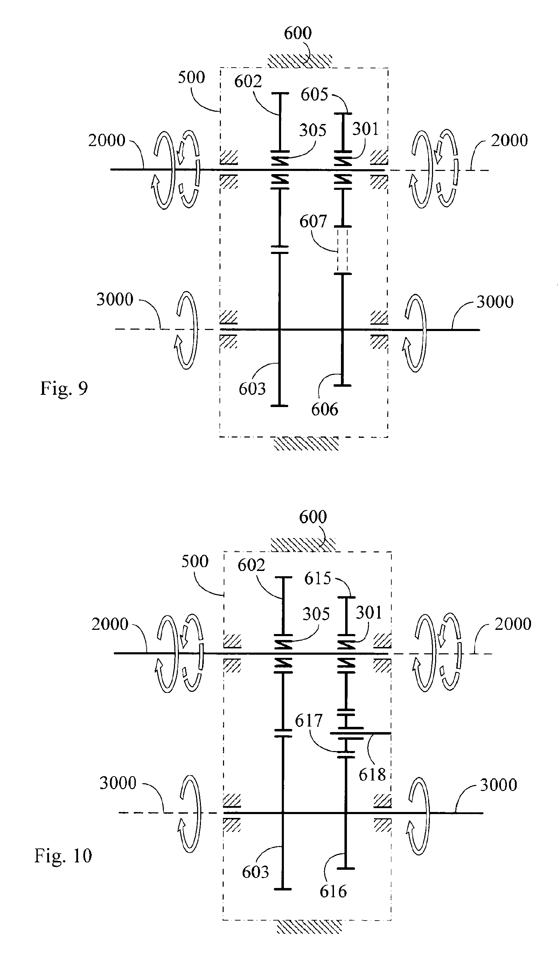

Fig. 9 is a schematic structural view showing the 9th embodiment of the integrated gear train with bidirectional input and one-way output.

As shown in Fig. 9, the integrated gear train with bidirectional input and one-way output is constituted by integrating with the transmission with different drive rotating direction, in which the input shaft and the output shaft have different axises, the main components including:
-- one end of the input shaft (2000) through installed at one side of the shell of the transmission gear train (500) via bearing structure, another end of the input shaft (2000) through the driving wheel (605) via the one-way transmission (301), a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (602);
-- the driving wheel (602) and the driving wheel (603) with different rotary directions, the driving wheel (603) integrated with the output shaft (3000), the driving wheel (606) integrated with the output shaft (3000), and a bearing installed between the output shaft (3000) and the shell of the transmission gear train (500);
-- the driving wheel (605) and the driving wheel (606) through the transmission belt (607), such as pulley or sprocket, for constituting driving wheel set with same rotary direction;
-- the driving wheel (606) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (301) for driving the driving wheel (605), through the transmission belt (607) for driving the driving wheel (606), and then driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603) for driving the output shaft (3000) to produce the first rotary direction output to constitute the second driving gear train;
-- one or two ends of the output shaft (3000) for outputting.

Fig. 10 is a schematic structural view showing the 10th embodiment of the integrated gear train with bidirectional input and one-way output;

As shown in Fig. 10, the integrated gear train with bidirectional input and one-way output is constituted by integrating with the transmission with different drive rotating direction, in which the input shaft and the output shaft have different axises, the main components including:
-- one end of the input shaft (2000) through installed at one side of the shell of the transmission gear train (500) via bearing structure, another end of the input shaft (2000) through the driving wheel (615) via the one-way transmission (301), a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (602);
-- the driving wheel (615) through the driving wheel (617) for driving the driving wheel (616), the driving wheel (616) integrated with the output shaft (3000), and a bearing installed between the output shaft (3000) and the shell of the transmission gear train (500);
-- the driving wheel (617) rotating at the revolving shaft (618), and the revolving shaft (618) installed at the shell of the transmission gear train (500);
-- the driving wheel (602) and the driving wheel (603) with different rotary directions;
-- the driving wheel (603) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (301) for driving the driving wheel (615), through the transmission belt (617) for driving the driving wheel (616), and then driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603), and then the driving wheel (603) driving the output shaft (3000) to produce the first rotary direction output to constitute the second driving gear train;
-- one or two ends of the output shaft (3000) for outputting.

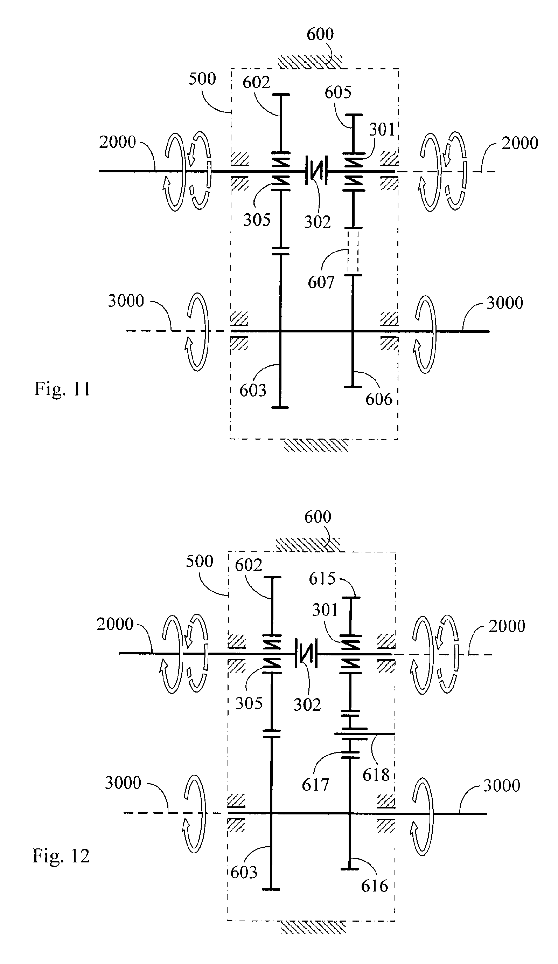

Fig. 11 is a schematic structural view showing the 11th embodiment of the integrated gear train with bidirectional input and one-way output;

As shown in Fig. 11, the integrated gear train with bidirectional input and one-way output is constituted by integrating with the transmission with different drive rotating direction, in which the input shaft and the output shaft have different axises, the main components including:
-- one end of the input shaft (2000) through installed at one side of the shell of the transmission gear train (500) via bearing structure, another end of the input shaft (2000) through one-way transmission (302) for coaxially installing in series, a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the driving wheel (602), and the one-way transmission (305) installed between the above both;
-- the driving wheel (602) and the driving wheel (603) with different rotary directions, the driving wheel (603) integrated with the output shaft (3000), and a bearing installed between the output shaft (3000) and the shell of the transmission gear train (500);
-- the one-way transmission (301) installed between the input shaft (2000) and the driving wheel (605);
-- the driving wheel (605) driving the driving wheel (606) via the transmission belt (607);
-- the driving wheel (606) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (302) for driving another end of the input shaft (2000), and further through the one-way transmission (301) for driving the driving wheel (605), through the transmission belt (607) for driving the driving wheel (606), and then driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603), and the driving wheel (603) driving the output shaft (3000) to produce the first rotary direction output to constitute the second driving gear train;
-- one or two ends of the output shaft (3000) for outputting.

Fig. 12 is a schematic structural view showing the 12th embodiment of the integrated gear train with bidirectional input and one-way output;

As shown in Fig. 12, the integrated gear train with bidirectional input and one-way output is constituted by integrating with the transmission with different drive rotating direction with the input shaft and the output shaft coaxially installed in series, the main components including:
-- one end of the input shaft (2000) through installed at one side of the shell of the transmission gear train (500) via bearing structure, another end of the input shaft (2000) through the one-way transmission (302) for coaxially installing in series, a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the driving wheel (615), and the one-way transmission (301) installed between the above both;
-- the driving wheel (615) rotating at the driving wheel (617) of the revolving shaft (618), and then driving the driving wheel (616), the driving wheel (616) integrated with the output shaft (3000), and a bearing installed between the output shaft (3000) and the shell of the transmission gear train (500);
-- the revolving shaft (618) integrated with the shell of the transmission gear train (500);
-- the driving wheel (603) and the driving wheel (602) integrated for a driving wheel set with different rotary direction;
-- the driving wheel (603) integrated with the output shaft (3000);
-- the shell of the transmission gear train (500) fixed at the machine body (600);
-- the driving wheels (602), (603), (615), (616), (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (302) for driving another end of the input shaft (2000), and further through the one-way transmission (301) for driving the driving wheel (615), through the transmission belt (617) for driving the driving wheel (616), and then through the driving wheel (616) for driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603), and the driving wheel (603) driving the output shaft (3000) to produce the first rotary direction output to constitute the second driving gear train;
-- one or two ends of the output shaft (3000) for outputting.

According to one aspect of the present invention, an integrated gear transmission unit with bidirectional input and one-way output, the first gear train and the second gear train integrate to be a structure with common revolving shaft, in which the input shaft and the output shaft of the first gear train are at same rotary direction, and the input shaft and the output shaft of the second gear train are at different rotary direction, through the above integrated gear train with bidirectional input and one-way output, the rotary direction of the input shaft is changed, and the output direction of the output shaft is constant when the input shaft is driven in a first rotary direction and in a second rotary direction, comprises:
an input shaft (2000);
an output shaft (3000);
a first one-way transmission (302) between the input shaft and output shaft permitting the input shaft to drive the output shaft in a first rotary direction to output in the first rotary direction when the input shaft turns in the first rotary direction;
an integrated gear train with bidirectional input and one-way output disposed between the input shaft (2000) and the output shaft (3000), and including a second one-way transmission (301), the gear train permitting the output shaft to be driven to output in the first rotary direction still when the input shaft turns in a second rotary direction.

## Claims

1. An integrated gear train with bidirectional input and one-way output, wherein the first gear train and the second gear train integrate to be a structure with common revolving shaft, in which the input shaft and the output shaft of the first gear train are at same rotary direction, and the input shaft and the output shaft of the second gear train are at different rotary direction, through the above integrated gear train with bidirectional input and one-way output, the rotary direction of the input shaft is changed, and the output direction of the output shaft is constant;
the structural patterns of the integrated gear train with bidirectional input and one-way output include the input shaft and the output shaft coaxially fitting, or the input shaft and the output shaft with different axises;
the main features are as following:
-- transmission: constituted by gear, friction wheel, pulley, drive belt group, sprocket, transmission chain group, transmission linkage, or rotary transmission actuated by liquid, for getting rotary output with same or different direction, and same or different speed ratio with rotary input;
-- the forward and reverse rotary power source deriving from one or more of the following power source, including human power, machine power, electric motors, hydraulic motors or pneumatic motors; including:
1) the forward and reversely driven by human power; or
2) the forward and reversely driven by machine power; or
3) the forward and reversely driven by hydraulic or pneumatic motors; or
4) the forward and reversely driven by electric motors; or
5) driven at different directions by the rotary power sources from 1)∼4);
-- the first rotary direction and the second rotary direction are reverse;
-- if the input terminal is driven by the first rotary direction, the first rotary direction output is produced through the first driving gear train driving the output terminal;
-- if the input terminal is driven by the second rotary direction, the first rotary direction output is produced through the second driving gear train driving the output terminal;
-- an one-way transmission is installed between the first driving gear train and the second driving gear train to avoid the interference from the second driving gear train when the first driving gear train is used to be the first rotary direction input and produces the first rotary direction output; and
-- an one-way transmission is installed between the second driving gear train and the first driving gear train to avoid the interference from the first driving gear train when the second driving gear train is used to be the second rotary direction input and produces the first rotary direction output.

2. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (602);
-- the rotary direction of driving wheel (602) being different from that of driving wheel (603), driving wheel (603) and driving wheel (616) co-integrated with revolving shaft (604), and a bearing installed between the revolving shaft (604) and the shell of the transmission gear train (500);
-- the driving wheel (616) rotating at the driving wheel (617) of the revolving shaft (618), and then driving the driving wheel (615) for constituting driving wheel set with same rotary direction;
-- the revolving shaft (618) integrated with the shell of the transmission gear train (500);
-- the driving wheel (615) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (616), and then the driving wheel (616) through the driving wheel (617) for further the driving wheel (615), and then the driving wheel (615) driving the output shaft (3000) to produce the first rotary direction output to constitute the second driving gear train.

3. The integrated gear train with bidirectional input and one-way output as claimed in Claim 1 wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (615);
-- the driving wheel (615) rotating at the driving wheel (617) of the revolving shaft (618), and then driving the driving wheel (616), the driving wheel (616) and the driving wheel (603) co-integrated with the revolving shaft (604), and a bearing installed between the revolving shaft (604) and the shell of the transmission gear train (500);
-- the revolving shaft (618) integrated with the shell of the transmission gear train (500);
-- the driving wheel (603) and the driving wheel (602) integrated for a driving wheel set with different rotary direction;
-- the driving wheel (602) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (615), and then the driving wheel (615) driving the driving wheel (616) and the driving wheel (603) via the driving wheel (617), and then the driving wheel (603) driving the driving wheel (602), and then the driving wheel (602) driving the output shaft (3000) to produce the first rotary direction output to constitute the second driving gear train.

4. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (602);
-- the rotary direction of driving wheel (602) being different from that of driving wheel (603), driving wheel (603) and driving wheel (606) co-integrated with the revolving shaft (604), and a bearing installed between the revolving shaft (604) and the shell of the transmission gear train (500);
-- the driving wheel (606) and the driving wheel (605) co-integrated with transmission belt (607), such as pulley or sprocket, through transmission for constituting a driving wheel set with same rotary direction;
-- the driving wheel (605) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (606), and then the driving wheel (606) driving the driving wheel (605) for driving the output shaft (3000) to produce the first rotary direction output to constitute the second driving gear train.

5. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) through the output shaft (3000) via the one-way transmission (301), a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), and integrated with the driving wheel (605);
-- the driving wheel (606) and the driving wheel (605) co-integrated with the transmission belt (607), such as pulley or sprocket, through transmission for constituting a driving wheel set with same rotary direction, the driving wheel (603) and the driving wheel (606) co-integrated with the revolving shaft (604), and a bearing installed between the revolving shaft (604) and the shell of the transmission gear train (500);
-- the driving wheel (603) and the driving wheel (602) with different rotary directions;
-- the driving wheel (602) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (605), and then the driving wheel (605) driving the driving wheel (606) and the driving wheel (603), and then the driving wheel (603) driving the driving wheel (602) for driving the output shaft (3000) to produce the first rotary direction output to constitute the second driving gear train.

6. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the driving wheel (602), and the one-way transmission (305) installed between the above both;
-- the driving wheel (602) and the driving wheel (603) with different rotary directions, the driving wheel (603) and the driving wheel (616) co-integrated with the revolving shaft (604), and a bearing installed between the revolving shaft (604) and the shell of the transmission gear train (500);
-- the driving wheel (616) rotating at the driving wheel (617) of the revolving shaft (618), and then driving the driving wheel (615) for constituting driving wheel set with same rotary direction;
-- the revolving shaft (618) integrated with the shell of the transmission gear train (500);
-- the driving wheel (615) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (616), and then the driving wheel (616) through the driving wheel (617) for further driving the driving wheel (615), and then the driving wheel (615) driving the output shaft (3000) to produce the first rotary direction output to constitute the second driving gear train.

7. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the driving wheel (615), and the one-way transmission (305) installed between the above both;
-- the driving wheel (615) rotating at the driving wheel (617) of the revolving shaft (618), and then driving the driving wheel (616), the driving wheel (616) and the driving wheel (603) co-integrated with the revolving shaft (604), and a bearing installed between the revolving shaft (604) and the shell of the transmission gear train (500);
-- the revolving shaft (618) integrated with the shell of the transmission gear train (500);
-- the driving wheel (603) and the driving wheel (602) integrated for a driving wheel set with different rotary direction;
-- the driving wheel (602) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (615), and then the driving wheel (615) driving the driving wheel (616) and the driving wheel (603) via the driving wheel (617), and then the driving wheel (603) driving the driving wheel (602), and then the driving wheel (602) driving the output shaft (3000) to produce the first rotary direction output to constitute the second driving gear train.

8. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (602);
-- the driving wheel (602) and the driving wheel (603) with different rotary directions, the driving wheel (603) and the driving wheel (606) co-integrated with the revolving shaft (604), and a bearing installed between the revolving shaft (604) and the shell of the transmission gear train (500);
-- the driving wheel (606) and the driving wheel (605) co-integrated with the transmission belt (607), such as pulley or sprocket, through transmission for constituting a driving wheel set with same rotary direction;
-- the driving wheel (615) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (602), and then the driving wheel (602) driving the driving wheel (603) and the driving wheel (606), and then the driving wheel (606) through the transmission belt (607) for further driving the driving wheel (605), and then the driving wheel (605) driving the output shaft (3000) to produce the first rotary direction output to constitute the second driving gear train.

9. The integrated gear train with bidirectional input and one-way output as claimed in Claim 1, wherein the system is constituted by integrating with the transmission with different drive rotating direction with the input shaft and the output shaft coaxial fitting, the main components including:
-- one end of the input shaft (2000) through installed at one side of the shell of the transmission gear train (500) via bearing structure, another end of the input shaft (2000) coaxially connecting with the one-way transmission (302) in series and through the output shaft (3000) via the one-way transmission (301), and a bearing installed between the output shaft (3000) and the shell of the transmission gear train (500);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (605);
-- the driving wheel (605) through the transmission belt (607) for driving the driving wheel (606), the driving wheel (606) and the driving wheel (603) co-integrated with the revolving shaft (604), and a bearing installed between the revolving shaft (604) and the shell of the transmission gear train (500);
-- the driving wheel (603) and the driving wheel (602) integrated for a driving wheel set with different rotary direction;
-- the driving wheel (602) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (302) for driving another end of the input shaft (2000), and further through the one-way transmission (301) for driving the output shaft (3000) to produce the first rotary direction output to constitute the first driving gear train;
-- by way of the above structure, the input shaft (2000) is driven at the second rotary direction, through the one-way transmission (305) for driving the driving wheel (605), and then the driving wheel (605) driving the driving wheel (606) via the transmission belt (607), and then the driving wheel (606) through the revolving shaft (604) for driving the driving wheel (603), and then the driving wheel (603) driving the driving wheel (602), and the driving wheel (602) driving the output shaft (3000) to produce the first rotary direction output to constitute the second driving gear train.

10. The integrated gear train with bidirectional input and one-way output as claimed in Claim 1, wherein the system is constituted by integrating with the transmission with different drive rotating direction, in which the input shaft and the output shaft have different axises, the main components including:
-- one end of the input shaft (2000) through installed at one side of the shell of the transmission gear train (500) via bearing structure, another end of the input shaft (2000) through the driving wheel (605) via the one-way transmission (301), a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (602);
-- the driving wheel (602) and the driving wheel (603) with different rotary directions, the driving wheel (603) integrated with the output shaft (3000), the driving wheel (606) integrated with the output shaft (3000), and a bearing installed between the output shaft (3000) and the shell of the transmission gear train (500);
-- the driving wheel (605) and the driving wheel (606) through the transmission belt (607), such as pulley or sprocket, for constituting driving wheel set with same rotary direction;
-- the driving wheel (606) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (301) for driving the driving wheel (605), through the transmission belt (607) for driving the driving wheel (606), and then driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603) for driving the output shaft (3000) to produce the first rotary direction output to constitute the second driving gear train;
-- one or two ends of the output shaft (3000) for outputting.

11. The integrated gear train with bidirectional input and one-way output as claimed in Claim 1, wherein the system is constituted by integrating with the transmission with different drive rotating direction, in which the input shaft and the output shaft have different axises, the main components including:
-- one end of the input shaft (2000) through installed at one side of the shell of the transmission gear train (500) via bearing structure, another end of the input shaft (2000) through the driving wheel (615) via the one-way transmission (301), a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the one-way transmission (305), for integrating with the driving wheel (602);
-- the driving wheel (615) through the driving wheel (617) for driving the driving wheel (616), the driving wheel (616) integrated with the output shaft (3000), and a bearing installed between the output shaft (3000) and the shell of the transmission gear train (500);
-- the driving wheel (617) rotating at the revolving shaft (618), and the revolving shaft (618) installed at the shell of the transmission gear train (500);
-- the driving wheel (602) and the driving wheel (603) with different rotary directions;
-- the driving wheel (603) integrated with the output shaft (3000);
-- the shell of the transmission gear train (500) fixed at the machine body (600);
-- the driving wheels (602), (603), (615), (616), and (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (301) for driving the driving wheel (615), through the transmission belt (617) for driving the driving wheel (616), and then driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603), and then the driving wheel (603) driving the output shaft (3000) to produce the first rotary direction output to constitute the second driving gear train;
-- one or two ends of the output shaft (3000) for outputting.

12. The integrated gear train with bidirectional input and one-way output as claimed in Claim 1, wherein the system is constituted by integrating with the transmission with different drive rotating direction, in which the input shaft and the output shaft have different axises, the main components including:
-- one end of the input shaft (2000) through installed at one side of the shell of the transmission gear train (500) via bearing structure, another end of the input shaft (2000) through one-way transmission (302) for coaxially installing in series, a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the driving wheel (602), and the one-way transmission (305) installed between the above both;
-- the driving wheel (602) and the driving wheel (603) with different rotary directions, the driving wheel (603) integrated with the output shaft (3000), and a bearing installed between the output shaft (3000) and the shell of the transmission gear train (500);
-- the one-way transmission (301) installed between the input shaft (2000) and the driving wheel (605);
-- the driving wheel (605) driving the driving wheel (606) via the transmission belt (607);
-- the driving wheel (606) integrated with the output shaft (3000);
-- the shell of the transmission gear train (500) fixed at the machine body (600);
-- the driving wheels (602) and (603) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by transmission belt, pulley (such as toothed belt or steel belt), or sprocket with chain;
-- by way of the above structure, the input shaft (2000) driven at the first rotary direction, through the one-way transmission (302) for driving another end of the input shaft (2000), and further through the one-way transmission (301) for driving the driving wheel (605), through the transmission belt (607) for driving the driving wheel (606), and then driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603), and the driving wheel (603) driving the output shaft (3000) to produce the first rotary direction output to constitute the second driving gear train;
-- one or two ends of the output shaft (3000) for outputting.

13. The integrated gear train with bidirectional input and one-way output as claimed in Claim 1, wherein the system is constituted by integrating with the transmission with different drive rotating direction with the input shaft and the output shaft coaxially installed in series, the main components including:
-- one end of the input shaft (2000) through installed at one side of the shell of the transmission gear train (500) via bearing structure, another end of the input shaft (2000) through the one-way transmission (302) for coaxially installing in series, a bearing installed between the another end of the input shaft (2000) and the shell of the transmission gear train (500), and the rotary power source inputting through one or two ends of the input shaft (2000);
-- shell of the transmission gear train (500): machine parts installed for constituting the integrated gear train with bidirectional input and one-way output;
-- machine body (600): relatively static organization structure;
-- the input shaft (2000) through the driving wheel (615), and the one-way transmission (301) installed between the above both;
-- the driving wheel (615) rotating at the driving wheel (617) of the revolving shaft (618), and then driving the driving wheel (616), the driving wheel (616) integrated with the output shaft (3000), and a bearing installed between the output shaft (3000) and the shell of the transmission gear train (500);
-- the revolving shaft (618) integrated with the shell of the transmission gear train (500);
-- the driving wheel (603) and the driving wheel (602) integrated for a driving wheel set with different rotary direction;
-- the driving wheel (603) integrated with the output shaft (3000);
-- the shell of the transmission gear train (500) fixed at the machine body (600);
-- the driving wheels (602), (603), (615), (616), (617) constituted by gears or friction wheels;
-- the status of the transmission ratio in the driving wheel set with different rotary direction is for acceleration, deceleration, or constant velocity;
-- the status of the transmission ratio in the driving wheel set with same rotary direction is for acceleration, deceleration, or constant velocity;
-- the driving wheel set with same rotary direction constituted by gear set of idler wheel or internal gear set;
-- by way of the above structure, the input shaft (2000) driven at the first rotary direction, through the one-way transmission (302) for driving another end of the input shaft (2000), and further through the one-way transmission (301) for driving the driving wheel (615), through the transmission belt (617) for driving the driving wheel (616), and then through the driving wheel (616) for driving the output shaft (3000) to produce the first rotary direction output to constitute the first driving gear train;
-- by way of the above structure, the input shaft (2000) is driven at the second rotary direction, through the one-way transmission (305) driving the driving wheel (602), and then the driving wheel (602) driving the driving wheel (603), and the driving wheel (603) driving the output shaft (3000) to produce the first rotary direction output to constitute the second driving gear train;
-- one or two ends of the output shaft (3000) for outputting.
